# EUROPEAN PATENT SPECIFICATION

(11) **EP 4 359 876 B1**
(45) Date of publication and mention of the grant of the patent: **18.11.2026**
(21) Application number: 21844671.4
(22) Date of filing: 22.12.2021
(51) Int. Cl.: G05B 23/02

(54) **MONITORING OPERATION OF A MACHINE**
ÜBERWACHUNG DES BETRIEBS EINER MASCHINE
SURVEILLANCE DE FONCTIONNEMENT DE MACHINE

(30) Priority: 25.06.2021 DE 102021116562
(43) Date of publication of application: 01.05.2024
(73) Proprietor: Qlar Europe GmbH, 64293 Darmstadt (DE)
(72) Inventor: RAIS, Viktor, 64293 Darmstadt (DE); HACKSTEIN, Holger, 64293 Darmstadt (DE)
(86) International application number: PCT/EP2021/087212
(87) International publication number: WO 2022/268352

(56) References cited:
- WO-A1-2011/034805
- WO-A1-2017/196821
- WO-A1-2021/063486
- KR-A- 20200 034 545
- US-A1- 2013 024 179
- US-A1- 2019 219 994
- US-A1- 2020 372 385

## Description

The present invention relates to an apparatus, method and computer program for monitoring operation of a machine having a mechanical component.

Efficient and effective maintenance of machines and their mechanical components is important to ensure normal operation and to allow for intervention by engineers, where possible, to perform remedial action such as replacement of parts to prevent critical failures and reduce the associated machine downtime. Operation of a machine may be monitored using one or more sensors located on the machine and data collected by these sensors on an ongoing basis during runtime can be processed by a data processing apparatus and used to form inferences regarding a mechanical state of the machine and thus to identify whether or not the machine is operating normally.

US 2013/024179 describes a system which provides means for acquired measurements of one or more operating parameters of a turbine engine and KR 2020 0034545 describes a data conversion method using a nested scatter plot and an apparatus thereof'.

Even a single machine may produce a vast quantity of sensor data - perhaps originating from a plurality of sensors including sensors of different types. The longer that the machine is running for, the larger the volume of data that is generated by the sensors for analysis. Processing this vast quantity of sensor data to attempt to obtain an accurate overview of the overall condition of a machine can be challenging. A capability to discriminate between different potential mechanical problems and machine maintenance issues based on the sensor data and without relying on a detailed physical inspection of the machine is desirable.

It is therefore an object of the present invention to provide a computer implemented method for monitoring operation of a machine, a computer-implemented method for training an artificial neural network to identify any deviations from normal operation of a machine and a data processing apparatus.

According to a first aspect of the present invention there is provided a computer-implemented method for monitoring operation of a machine having a mechanical component, the method comprising:
receiving sensor data comprising a time series of measurements of an operational parameter of the machine corresponding to a state variable;
processing the time series of measurements for the state variable using a machine-learning model pre-trained to predict normal operational behaviour of the machine based on values of the state variable observed for a time period during normal operation of the machine, the processing to calculate a standardized residual for the state variable across the time series based on a prediction of the pre-trained machine-learning model; and
identifying any deviation from normal operation of the machine based on values of the standardized residual, wherein the identification of the deviation from normal operation comprises taking into account a sign of the standardized residual such that an overshooting of the standardized residual is distinguishable from an under-shooting of the standardized residual.

In addition the Computer-implemented method comprises a step that the received sensor data relates to a plurality of operational parameters of the machine corresponding to respective different state variables and wherein the identification of the deviation takes into account correlations between the standardized residuals of the plurality of operational parameters.

In addition a respective different pre-trained machine learning model is provided for each different state variable and an integer number, N, of linear regression models is provided respectively to predict normal operational behaviour for N state variables.

The computer-implemented method is generating a machine-readable heatmap for the plurality of state variables across the time series, the heatmap to indicate for each state variable, any overshooting and any undershooting of the standardized residuals for at least one state variable and wherein the heatmap is used in the identification of the deviation from normal operation.

The computer-implemented method is generating a digital image representing the heatmap and providing the heatmap to an artificial neural network pre-trained using heatmaps for the plurality of state variables captured during normal operation of the machine, the identification of any deviation from normal operation being performed using the pre-trained artificial neural network.

In a further embodiment the computer-implemented method comprises a step, wherein the artificial neural network is pre-trained based on the heatmaps for the plurality of state variables captured during normal operation to perform damage classification to identify different types of deviation from normal operation based on correlations in undershooting and overshooting as a function of time between different ones of the plurality of state variables.

In addition the computer-implemented method may comprise a step, wherein the artificial neural network is pre-trained by segmenting a heatmap into a plurality of distinct or partially overlapping time segments in inputting the time-segmented heatmap images to the artificial neural network for classification.

The heatmap images used for pre-training may be labelled by a known maintenance issue present in the machine when the sensor data for the heatmap image was captured.

In addition the present invention relates to a computer-implemented method for training an artificial neural network to identify any deviations from normal operation of a machine having a mechanical part according to independent claim 5.

In a preferred embodiment the heatmap data set is rendered as image data and the heatmap image is input to the artificial neural network to perform the training.

According to another aspect the artificial neural network may be one of a convolutional neural network and a long term short term memory neural network.

The heatmap may be segmented in to a plurality of distinct or overlapping time segments prior to input to the artificial neural network to train the artificial neural network.

According to another aspect of the invention a transitory or non-transitory machine readable medium is provided, comprising machine-readable instructions to perform the computer-implemented method.

In addition the present invention relates to a data processing apparatus according to independent claim 10 and another data processing apparatus according to independent claim 11.

Embodiments of the invention are further described hereinafter with reference to the accompanying drawings, in which:
Figure 1 schematically illustrates a vibrating machine and a condition monitoring system to detect any deviation from normal operation;
Figure 2 is a flow chart schematically illustrating a process for raising a machine maintenance alarm;
Figure 3 schematically illustrates a flow chart corresponding to training an image processing machine learning model to process heatmap images of standardized residuals to detect any machine maintenance issues;
Figure 4A is a graph of an absolute value of a Longitudinal Rotation Amplitude state variable in degrees per second plotted against time in hours: minutes : seconds;
Figure 4B is a heatmap of standardized residuals for a plurality of state variables for the vibrating machine;
Figure 5 schematically illustrates a heatmap of state variables covering a time period of operation of the vibrating machine of Figure 1;
Figure 6 schematically illustrates an improvement in diagnostic power of measurements of residuals of state variables achieved by performing "standardization" of the residuals;
Figure 7 schematically illustrates three different heatmaps, each heatmap being characteristic of a different type of machine maintenance issue;
Figure 8 schematically illustrates how heatmaps characteristic of two different machine maintenance issues may be segmented and then input to an image processing machine learning model such as a Convolutional Neural network model or Long Short Term Memory model;
Figure 9 schematically illustrates the use of standardised residuals to identify a defect in a vertical roller mill machine; and
Figure 10 schematically illustrates machine readable storage and machine readable instructions for monitoring operation of a machine having a mechanical component.

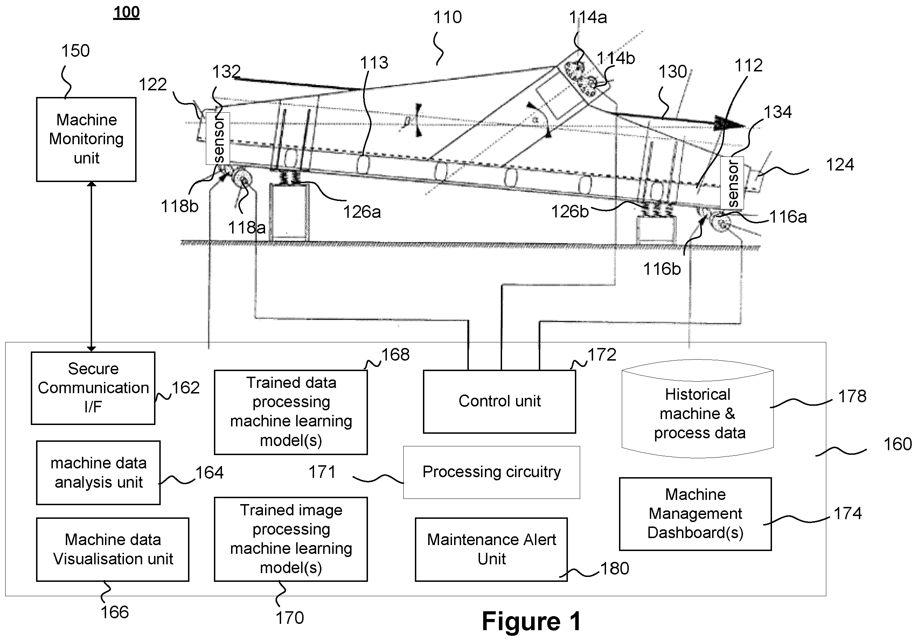

Figure 1 schematically illustrates a machine monitoring system 100 comprising a vibrating machine 110 and a condition monitoring system 160 to detect any deviation from normal operation of the machine. In this example the machine is a vibrating machine, but any machine having at least one mechanical part may be monitored. Furthermore, two or more machines of the same type or of different types may be monitored in parallel using the system according to the present technique. The system comprises the vibrating machine 110, a machine monitoring unit 150 and the condition monitoring system 160.

The vibrating machine 110 comprises a material carrier 112, a first exciter 114a and corresponding first incremental encoder 114b, a second exciter 116a and corresponding second incremental encoder 116b, a third exciter 118a and corresponding third incremental encoder 118b. The exciters 114a, 116a, 118a may be mechanical or magnetic exciters. The vibrating machine 100 further comprises an inlet 122, an outlet 124, and two sets of supporting springs 126a, 126b underneath the material carrier 112. The material carrier 112 has a plurality of rollers 113 to provide locomotion of a material transport belt (not shown). The rollers 113 may be provided with bearings (not shown). An inlet sensor 132 and an outlet sensor 134 are located on the vibrating machine 110. An arrow 130 indicates a processing direction of goods to be processed by providing them via the inlet 122 to the material carrier 112.

The first exciter 114a is arranged to impart an oscillating force to the material carrier 112. The oscillating force is dependent on an excitation frequency of the first exciter 114a. The second and third exciters 116a and 118a may be provided to dampen any undesired vibrations at the inlet 122 or the outlet 124 caused by the oscillations induced by the first exciter 114a. The three incremental encoders 114b, 116b and 118b associated respectively with the three exciters 114a, 116a, 118a may be used by a control unit 172 in the condition monitoring system 160 to coordinate angular rotation and to control the relative phases of the exciters 114a, 116a, 118a. The exciters 114a, 116a, 118a control the transport or compression of goods placed on the material carrier 112 and also influence deformation of the material carrier 112 in both longitudinal and transverse directions.

A first sensor 132 and a second sensor 134 are provided on the vibrating machine 100 to monitor operational parameters of the machine. In this example the sensors 132, 134 are provided on the side walls of the vibrating machine, but they may be provided on other locations on the vibrating machine such as on or close to the exciters 114a. 116a, 118a or the material carrier 112. Sensor data from the sensors 132, 134 may be collected by the machine monitoring unit 150 located close to the machine 110. The sensors may record operational and machine-specific parameters which may be used to extract characteristic "state variables". The sensors may measure physical quantities, which may be converted to electrical quantities or digital signals. The machine monitoring unit 150 may collate data from different sensors on the vibrating machine 100 and supply the sensor measurement data to the condition monitoring system 160 via a secure communication interface 162. Alternatively, the sensor data may be communicated directly to the secure communication interface 162 without using the machine monitoring unit 150 as an intermediary.

The sensors may comprise, for example, an accelerometer or a gyroscope, but other types of sensors such as force sensors may be used. The accelerometer(s) may be used to measure one or more of the following different state variables: a resultant acceleration amplitude (ResAcc), a longitudinal acceleration amplitude (LongAcc) and a lateral acceleration amplitude (LatAcc) of the material carrier 112. Measurements from the accelerometer(s) may be used to calculate one or more of the following different state variables: an engine speed (ExciterSpeed) in revolutions per minute, a total harmonic distortion (THD), an exciter phase synchronicity (DriveNonDriveEPS) between any two exciters and an exciter amplitude synchronicity (DriveNonDriveAPS) between any two exciters. A driving exciter is exciter 114a whereas a non-drive exciter is one of the exciters 116a, 118a that performs vibration damping. State variables that may be measured using a gyroscope include: resultant rotation amplitude (ResRot), longitudinal rotational amplitude (Long Rot) and lateral rotational amplitude (LatRot). Measurements may be made by the sensors to calculate state variable measurements other than, or in addition to, those listed above. Different machines may have different sets of state variables associated with them.

The condition monitoring system 160 comprises the secure communication interface 162, a set of processing circuitry 171, a real-time machine data analysis unit 164, a machine data visualisation unit 166, a pre-trained data processing machine learning unit 168, a pre-trained image processing machine learning model 170, a control unit 172, a machine management dashboard unit 174, a database 178 for storing historical machine and process data and a maintenance alert unit 180. The processing circuitry 171 may comprise one or more general purpose or special purpose processors and may further comprise graphics processing units (GPUs) useful for implementing machine learning algorithms. The processing circuitry 171 may be implemented by microprocessors, integrated circuits, application specific integrated circuits (ASIC), programmable logic devices (PLD), digital signal processors (DSP), field programmable gate arrays (FPGAs). The secure communication interface 162 may comprise wireless connectivity hardware and software such as a Wi-Fi module for communication over a wireless Local Area Network (LAN). Communication of the sensor data from the vibrating machine to the condition monitoring system may be via a Wireless Personal Area Network (PAN), for example, using Bluetooth, ZigBee, Near Field or Infrared Communication. Data may even be communicated over a Wide Area Network if desired. The connection between the secure communication interface 162 and the machine monitoring unit may be a wired or a wireless connection. The connection may be permanent or temporary.

The functional units 164, 166, 168, 170, 171, 172, 174 and 180 of Figure 1 may be implemented general purpose processing circuitry configured by program code to perform specified processing functions or by special purpose processing circuity. Configuration of any unit to perform a specified function may be entirely in hardware, entirely in software or using a combination of hardware modification and software execution. Program instructions may be used to configure logic gates of general purpose or special-purpose processor circuitry to perform a processing function of one or more of the units illustrated in Figure 1. Furthermore, functionality of two or more of the different units may be combined and implemented by a single functional unit. Part or all of the functionality of the condition monitoring system 160 may be provided on a mobile computing interface such as a smartphone or a tablet computing device.

The control unit 172 is arranged to control, for example, the frequencies and phases of the three exciters 114a, 116a, 118a. The second and third exciters 116a, 118a may be controlled to rotate synchronously with the first exciter 114a, but offset from it by a phase of up to 180°. The control unit 172 may switch the vibrations on and off. Raw data gathered from the sensors 132, 134 in real-time during operation of the vibrating machine 110 may be communicated to the machine monitoring unit 150, which is provided close to the physical location of the vibrating machine 110. The machine monitoring unit collates a time series of data from the sensors 132, 134. The collected data may be timestamped based on a central clock to allow for comparison of contemporaneous measurements from different sensors. The collected sensor data is then supplied to the condition monitoring system 160 via the secure communication interface 162. The incoming sensor data that has been collected in real-time for machine monitoring is passed to the machine data analysis unit 164, where the sensor data is processed to extract state variables such as ResAcc, LongAcc, LatAcc, ResRot, LongRot, LatRot, ExciterSpeed, THD, DriveNonDriveEPS and DriveNonDriveEAS and track their variation with time on a common timescale.

The trained data processing machine learning unit 168 has N pre-trained machine learning models for N state variables in a one-to-one mapping. In this example, the data processing machine learning models are Linear Regression Models. Each Linear Regression Model has been trained based on operational data previously gathered on the same machine or on a machine of the same/similar type during the course of normal operation so that the state variables recorded represent those gathered when the machine was operating without any defects.

Machine learning models are trained using training data to make predictions based on "production data". The volume and quality of training data can influence a prediction accuracy of a trained model. Linear regression is both a statistical algorithm and a machine learning algorithm. It assumes a linear relationship between input variables (x) and a single output variable (y). In a simple regression problem the model might be y=M1*x + C1 where a goal of the training is to find the best values for the gradient M1 and the intercept C1 using the available training data. There may be a single input variable or multiple input variables. In higher dimensions, where there is more than one variable (x), then a plane or hyper-plane is formed rather than a line.

One way of training a linear regression algorithm from training data is to use a method of least squares. If the training data set is too small or there is bias in the training data such as collinearity in input values then the least squares technique can "overfit" the training data. A regularization procedure may be used to reduce the likelihood of overfitting the training data. For example the absolute sum of the coefficients may be minimized or the squared absolute sum of the coefficients may be minimized.

A trained linear regression model may comprise values for the gradient M1 and the intercept C1. Making predictions using the trained model simply involves solving the equation for a specific set of inputs based on "production data". Thus a prediction for a state variable y may be made by the machine learning model based on an input value of the variable x. It may be appropriate to prepare data such as training data prior to performing linear regression. Examples of ways that data can be prepared are by removing collinearity by calculating pairwise correlations in input data and removing the most correlated input data items or by performing a log transform on input data to make a distribution of the input data a closer approximation to a Gaussian distribution. In further examples data can be prepared by rescaling inputs using standardization or normalization.

According to the present technique, a linear regression model is trained based on a time-dependent behaviour of a given state variable for a period of normal (non-defective) operation of the machine. This training provides a time-dependent prediction for a value of the given state variable. Once the training process has established a best fit line, residuals representing differences between the training data points and the best fit line from the linear regression model are calculated as a function of time. A standard deviation of these residuals of the training data across the representative time period of normal operation is calculated. Then the real-time state variable data from the machine-data analysis unit 164 (the "production data") is input to the trained data processing machine learning model and residuals are calculated for each state variable relative to the predicted value for the state variable at the corresponding time. For normal operation of the machine and for a good prediction for the state variables the residuals should be close to zero. However, when there is a mechanical fault with the machine the prediction for the state variable may become inaccurate so the residuals may increase. The residuals for the production data are often standardized such that: 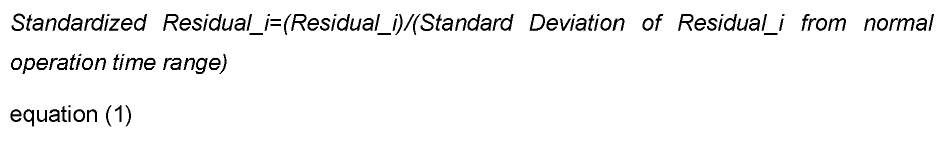 Standardized Residual_i=(Residual_i)/(Standard Deviation of Residual_i from normal operation time range) equation (1)

According to the present technique the sign of the residual may be taken into account such that overshooting the predicted value is represented differently from undershooting the predicted value. The standardized residuals as a function of time may be provided to the machine data visualisation unit 166, which may generate a "heatmap" as a function of time for one or more state variable. The heatmap is am image representing the time series of standardized residuals in colour. For example, an overshooting of the predicted value may be represented in a hot colour such as red whereas an undershooting of a predicted value of the state variable may be represented in a cold colour such as blue. However, any desired colour scheme may be used. Two or more different state variables may be illustrated as a function of time on the same heatmap to expose any correlations between deviations from predicted values for the different state variables.

The machine-data visualisation unit 166 may supply data for rendering the heatmap(s) to the machine management dashboard(s) 174, where a user may visually inspect the heatmaps to identify any significant deviations from normal operation of the machine. Significant deviations may be characterised by bands of colour (e.g. red or blue) indicating relatively persistent overshooting or undershooting of measured values of one or more state variables relative to the linear regression prediction for that state variable. A warning deviation in values of a state variable may be characterised by at least one of less intense and less persistent bands of colour relative to a critical deviation. The heatmap allows a user to readily visually identify any deviation from normal operation, even in advance of a critical maintenance issue developing.

In some examples, the time series of numerical data corresponding to the standardized residuals may be analysed by the machine-data analysis unit 164 to automatically detect when the standardised residuals for any given state variable exceed a threshold overshoot or a threshold undershoot relative to a value predicted by the image processing machine learning model that was used to fit the state variable data. This automated analysis of the overshooting and/or undershooting behaviour of one or more state variables may trigger the maintenance alert unit 180 to generate a user alert indicating that a maintenance activity is appropriate.

State variable data appropriate for the machine 110 may be stored in the historical machine and process data database 178. This database 178 may be used as a repository for test data for training of the data processing machine learning models 168 or the image processing machine learning models 170 or both.

In some examples, the machine-data visualisation unit 166 may provide the heatmaps for at least one of the state variables to the trained image processing machine learning unit 170. Heatmaps providing time correlated standardized residuals for a plurality of state variables may be used to predict imminent and to detect actual machine maintenance issues. Newly generated heatmaps for machine production data may be evaluated to predict the presence or absence of a defect in normal operation of the machine based on pattern recognition in one or more heatmap images by the trained image processing machine learning unit 170.

The trained image processing machine learning unit 170 may be implemented as a neural network machine learning model such as, for example, a convolutional neural network (CNN) or a Long Short-Term Memory Network (LSTM). It may have been trained based on labelled heatmaps to identify and distinguish between different types of maintenance issues such as, for example, a loose exciter, bearing damage on an exciter or pulley wear. The retention of the sign of the residuals so that overshooting of a predicted value may be distinguished from undershooting of a predicted value may improve the accuracy of maintenance issue identification and may improve the ability to readily discriminate between different fault types. The standardization of the residuals can improve an accuracy of detection of deviation from normal machine operation by more reliably indicating when deviations from behaviour predicted by the machine learning model is statistically significant.

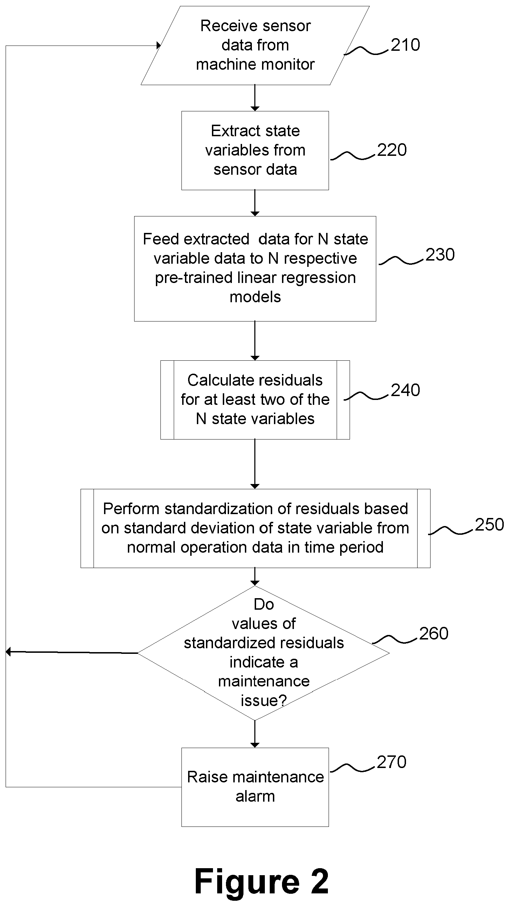

Figure 2 is a flow chart schematically illustrating a process for raising a machine maintenance alarm. At process element 210 sensor data from a plurality of sensors is received from the machine monitoring unit 150 proximal to the vibration machine 110. The sensors may be located in different positions on the machine being monitored and may be of different types (e.g. accelerometer, gyroscope, force sensor). At process element 220 state variables are extracted from the raw sensor data based on a list of state variables stored in a memory (not shown) of the condition monitoring system 160. The list of state variables may be preconfigured by a machine supplier/manufacturer or may be editable by a user or a by a machine maintenance coordinator of the machine supplier/manufacturer.

At process element 230, the extracted data for a non-zero integer number, N, of state variables is fed respectively to N pre-trained linear regression machine learning models for comparison with predicted values of each state variable. At process element 240 residuals are calculated individually for at least two of the N state variables, during which a sign of each residual is retained for use in subsequent analysis to allow an overshooting of a predicted value to be discriminated from an undershooting of a predicted value. A residual = (observed value - predicted value) where the predicted value in this example is obtained from the regression line. A residual is positive if it lies above the regression line, but negative if it lies below the regression line and zero if the regression line passes directly through the data point.

After the residuals have been calculated at process element 240, the process proceeds to element 250 where standardisation of the residuals is performed based on a standard deviation of the given state variable, calculated based on normal operation data of the machine in a time period corresponding to the capture of the training data. Standardization of the residuals allows statistically significant deviations from normal values of the state variables to be more reliably identified by taking into account a goodness of fit of the regression line to the training data. Empirically, standardization of the residuals has been found to improve the reliability of the maintenance issue prediction.

Next, at process element 260, the standardized residuals are analysed either visually via a heatmap representation, or numerically via an algorithm to identify any overshooting or undershooting of individual state variables (or combinations of state variables) that might be characteristic of a deviation from normal operation consistent with a machine maintenance issue. The analysis may make use of threshold values for the standardized residuals for any given state variable. The ability to distinguish between undershooting and overshooting in this process may improve the diagnostic power of the calculated residuals to predict or detect a machine maintenance issue. If the standardized residuals do indicate at process element 260 that there is a deviation from normal operation, then the process proceeds to element 270 where a maintenance alarm is raised. Otherwise, the process returns to the initial process element 210 where the process is repeated for incoming sensor data. Incoming sensor data may continue to be processed even if the maintenance alarm is raised at 270, unless it is deemed appropriate by the automated monitoring to halt operation of the machine to prevent any further damage to machine parts.

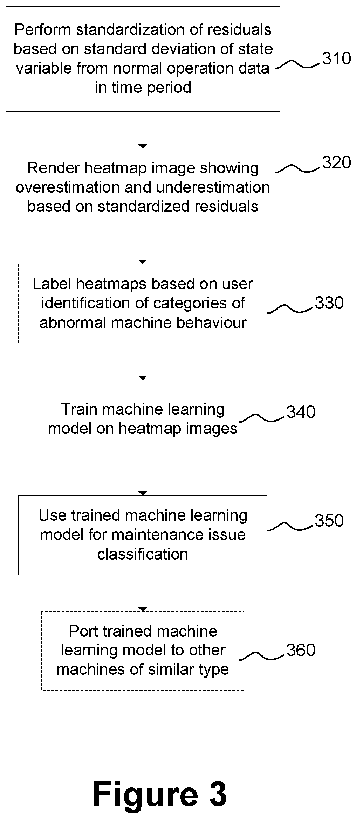

Figure 3 schematically illustrates a flow chart corresponding to training an image processing machine learning model (or image classifier) to process heatmap images of standardized residuals to detect machine maintenance issues. The training may also seek to discriminate between different maintenance issue types depending on the characteristic patterns exhibited by the heatmaps. At process element 310, standardization is performed of residuals that have been calculated based on differences between: (i) measured state variables for the time period of operation being monitored; and (ii) state variable values predicted from a linear regression machine learning model corresponding to a period of normal operation of the machine. The standardization involves dividing the residuals by a standard deviation of the state variable in a time period corresponding to capture of the training data used to pre-train the machine learning model.

Next, at process element 320, the standardized residuals are rendered into a heatmap to show overshooting and undershooting relative to the linear regression prediction for the corresponding state variable. Two or more state variables may be simultaneously displayed on the heatmap relative to the same time axis to allow any correlations in deviations between different state variables to be more readily identified. For training purposes, a plurality of different heatmaps may be labelled by a user to correspond to different categories of abnormal machine behaviour known to be associated with given heatmaps. Examples of labels attached to abnormal heatmaps include pulley wear, roller bearing damage and exciter damage. However, any type of damage or abnormal machine behaviour can be labelled and the type of damage may depend on the machine type. A plurality of labelled heatmaps may be provided corresponding to each damage type. An accuracy of recognition of the damage type achievable via implementing the trained machine learning model on newly generated sensor data may improve as the training data sample size of labelled heatmaps associated with that damage type increases. For example use of one hundred or more labelled heatmaps for each damage type for training is likely to give a more accurate prediction than ten or twenty labelled heatmaps for each damage type.

Next, at process element 340, the image processing machine learning model is trained using the labelled heatmaps to identify, based on pattern recognition in the images, specific types of machine maintenance issues. After the image processing machine learning model has been trained at element 340, it is deployed at element 350 on newly generated heatmaps based on incoming sensor data to recognise any heatmap patterns that might be characteristic of deviation from normal operation of the machine. Based on a newly input heatmap, the trained machine learning model may be able to output a prediction (image classification) of normal operation or defective operation. In the case of defective operation, a prediction of a particular machine maintenance problem may be made based on image characteristics of the heatmap.

At process element 360, if appropriate, the trained machine learning model capable of classifying the heatmaps may be ported to other machines of the same or similar types to perform fault prediction and identification. Any type of machine learning model capable of pattern recognition in images may be used. In some examples a CNN is used. Neural networks are a subset of machine learning algorithms comprised of node layers containing an input layer, one or more hidden layers, and an output layer. Each node connects to another node and has an associated weight and threshold. If the output of any individual node is above the specified threshold value, then that node is activated analogous to a real neuron firing, sending data to the next layer of the network. Otherwise, no data is passed along to the next layer of the network.

CNNs use matrix multiplication to identify patterns in an image. CNNs may have three types of layers comprising a convolutional layer, a pooling layer ad a fully connected layer. With each layer, the CNN increases in in complexity, identifying greater portions of an image. Earlier layers focus on simple features, such as colours and edges in images. As the image data progresses through the layers of the CNN, the CNN may start recognize larger elements or shapes of an image object until it finally identifies the whole object. CNNs are often deployed for computer vision. Other machine learning algorithms may be used to recognise patterns in the heatmap images. For example, an LSTM algorithm may alternatively be used. LSTMs are recurrent artificial neural networks capable of recognising patterns in sequences of data such as a numerical time series and are appropriate for processing sensor data.

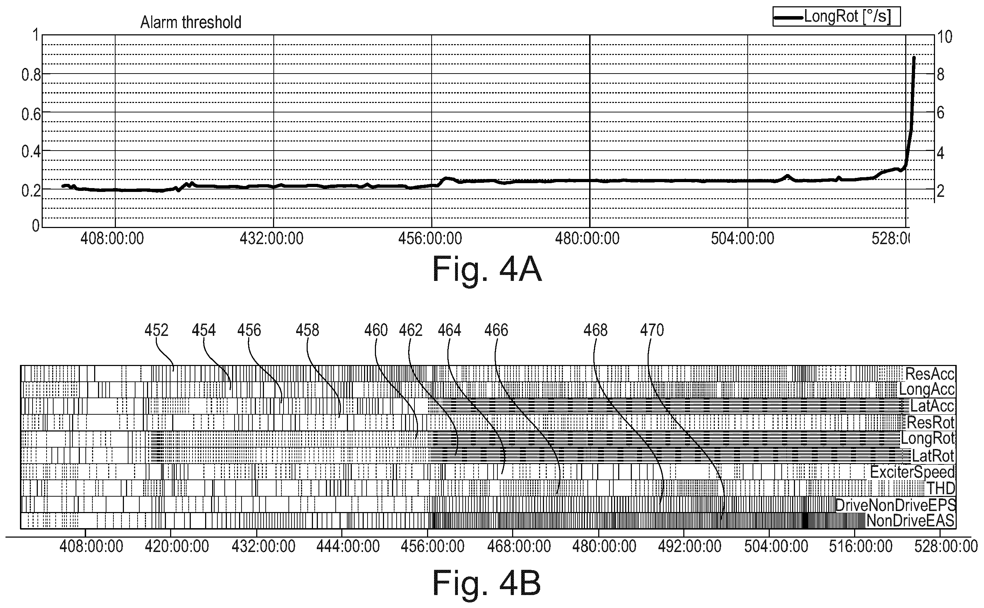

Figure 4A is a graph of the absolute value of the Longitudinal Rotation Amplitude in degrees per second plotted against time in *hours: minutes : seconds.* The graph also shows an alarm threshold at a value of just over 0.4°/s on the y axis. It can be seen that the measurement data points remain relatively stable at just over 0.2°/s from x axis (time) values of 408 hours until close to 528 hours, whereupon the value rises slightly and then very sharply and shoots above the threshold. From the monitoring of this absolute state variable data, a critical warning is triggered at the time of 528 hours and there is little or no sign prior to the machine becoming critical that a machine failure is imminent. The mechanical failure of the vibrating machine in this example is known to be caused by the exciter 114a having become loose and fallen off an exciter beam that holds it in position.

Figure 4B is a heatmap of standardized residuals for a plurality of state variables according to the present technique. This heatmap corresponds sensor data collected in the same time period and on the same vibrating machine as for the Figure 4A example. Although Figure 4B is a greyscale image, the heatmap may be represented in colour such as with red areas where the standardized residuals overshoot the regression line prediction and with blue areas where the standardized residuals undershoot the regression line prediction. The darker areas in Figure 4B correspond to overshooting or undershooting a predicted value of the given state variable. The dark grey areas mainly correspond to overshooting (could be represented in red) whereas the almost black darker areas correspond to undershooting.

Figure 4B shows standardized residuals for a total of ten different state variables as horizontal bars. An uppermost bar 452 corresponding to the state variable ResAcc shows some moderate undershooting via the dark banding between 420 hrs and 456 hrs. A second bar 454 corresponding to the state variable LongAcc shows some moderate overshooting from around 456 hrs on the x-axis and continuing right up until machine failure at just after 528 hrs. A third bar 456 corresponding to the state variable LatAcc shows some strong overshooting from around 456 hrs and continuing right up until machine failure at just after 528 hrs. A fourth bar 458 corresponding to the state variable ResRot shows some strong overshooting starting at around 522 hrs and thus provides a warning only relatively close to machine failure at around 530hrs. A fifth bar 460 corresponding to the state variable LongRot and a sixth bar 462 corresponding to the state variable LatRot show strong overshooting of these state variables persistently from 456hrs all the way up to machine failure at 530hrs. Seventh 464, eighth 466 and ninth bars 468 corresponding respectively to Exciter Speed, THD and DriveNonDriveEPS show only mild overshooting or mild undershooting in the time period between 456 hrs and 530 hrs, although the THD bar 466 has some moderate banding in bursts distributed in the period after 456hrs. A tenth bar 470 corresponds to the state variable DriveNonDriveEAS and shows moderate undershooting throughout the period between 456 hrs and machine failure at 530 hrs, becoming very strong at around 526hrs. Deviations from predicted values in each of the state variables LongAcc, LatAcc, ResRot, Long Rot, LatRot, ExciterSpeed and THD are predominantly or exclusively associated with overshooting. By way of contrast, deviations from predictions in the three state variables ResAcc, DriveNonDriveEPS and DriveNonDriveEAS are predominantly undershooting.

An overall message apparent from the heatmap of Figure 4B is that significant overshooting and undershooting starts at around 417 hrs and continues uniformly until around 456 hrs, when the overshooting and undershooting on at least five state variables become stronger, culminating in almost all state variables indicating deviations at around 522 hrs followed by machine failure at around 530 hrs. It is instructive to compare this picture in Figure 4B of operational status with the picture conveyed by the value of the absolute state variable in Figure 4A. It can be seen that the standardized residuals of at least a subset of the state variables provide a warning at around 417 hrs that machine operation is beginning to deviate from normal and that there is a step change in the level of that deviation at 456 hrs, which persists and intensifies close to ultimate machine failure at 530hrs. Thus the standardized residuals give a warning of imminent failure in this example at 417 hrs whereas the absolute value of the state variable LongRot indicates a critical failure only at 528 hrs. Thus the standardized residuals according to the present technique in this example provide a user with a warning about 110hrs (approximately 4.5 days) sooner than tracking of the absolute value of the standard variable. This earlier warning allows for earlier intervention to identify and resolve the mechanical problem, which may reduce the likelihood of more severe mechanical damage and reduce the downtime of the vibrating machine.

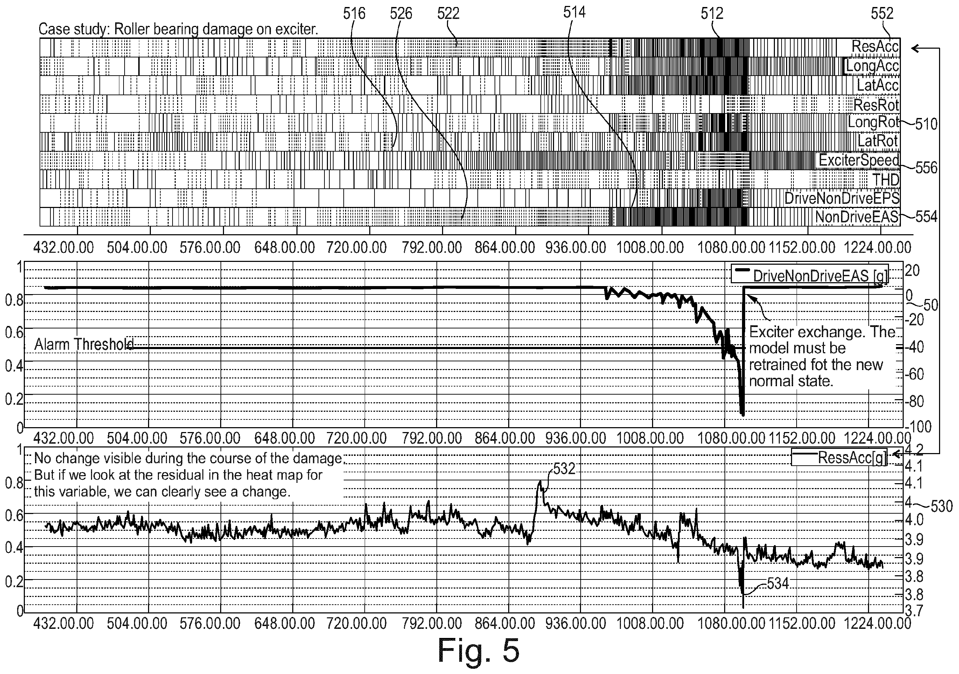

Figure 5 schematically illustrates a heatmap of state variables covering a time period spanning around 33 days of operation of the vibrating machine 110. In the second half of this period, roller bearing damage on the exciter 114a begins to develop and the damage results in the exciter being exchanged at approximately 1100 hrs on the time axis. An uppermost plot in Figure 5 is a heatmap of standardized residuals according to the present technique. The darkest regions such as regions 512 and 514 correspond to undershooting the machine learning model prediction whereas the mid-grey regions such as 522, 516, 526 show overshooting of the state variable value relative to the prediction. The same set of ten state variables are presented in the same ordering top to bottom as described above with regard to Figure 4B. It can be seen from the Figure 5 heatmap that some persistent overshooting begins to occur in the ResAcc 552 and DriveNondriveEAS 554 state variables at around 720 hrs on the time axis and this coincides with a corresponding undershooting of the ExciterSpeed 556 state variable. At about 960 hrs, the ResAcc 552 and DriveNondriveEAS 554 flip polarity from overshooting to undershooting and there is very strong undershooting for these two state variables from 960hrs through to 1100hrs. There is also strong undershooting for LatAcc in the same period whereas LongRot 510 transitions several times between overshooting and undershooting in this 960 hrs to 1100 hrs time period.

The middle chart in Figure 5 is a graph of an absolute value of measurements of the state variable DriveNondriveEAS, whose value, measured in multiples of the gravitational acceleration constant g (=9.81 ms⁻²), is initially relatively stable at around 0.85 until 960 hrs when the value begins to decline and then plummets below an alarm threshold value at 1080 hrs. The value subsequently remains below the alarm threshold until it rises sharply again at 1100 hrs, at which point the machine is fixed by exchanging the damaged exciter. Based on a threshold value of DriveNondriveEAS = 0.5 or below to trigger an alarm, the alarm to indicate a maintenance issue might only be raised at 1100 hrs based on this middle chart. Note that at 1100 hrs the exciter was exchanged and thereafter the machine learning models are retrained for the new normal state.

The lowermost of the three charts in Figure 5 is a graph of Resultant Acceleration Amplitude (ResAcc) against elapsed time. Although there are slight changes in the Value of ResAcc as a function of time, such as the small peak 532 at around 900 hrs followed later by a transient drop 534 in value and a gentle decline in value between 1030 hrs and 1224 hrs, there is no distinct change in the value of the ResAcc state variable to reflect the bearing damage. It is difficult to make any identification of the bearing damage on the exciter based on this lowermost plot.

It is clear that the heatmap of the uppermost chart in Figure 5 provides the earliest prediction of the deviation of the vibrating machine from normal operation. Early signs of deviation from normal operation start to appear at around 720hrs as opposed to 1100hrs. This allows for earlier intervention and resolution of mechanical problems prior to a critical failure of the machine.

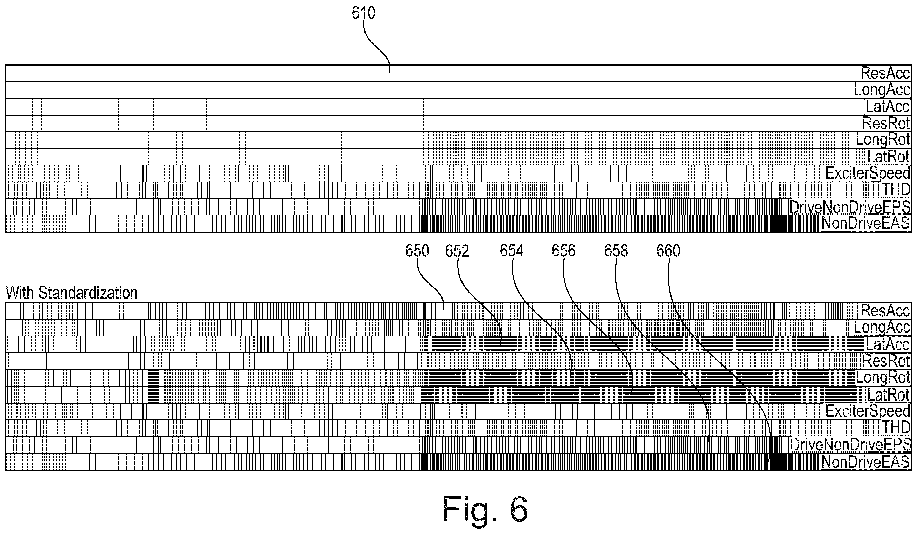

Figure 6 schematically illustrates an improvement in diagnostic power of measurements of residuals of state variables achieved by performing "standardization" of the residuals. A first heatmap 610 shows residual values against time for each of the ten example state variables, which are the same ten state variables illustrated in the heatmap of Figure 4B. In this view, which shows the residuals including their direction relative to the prediction (overshoot or undershoot) for the corresponding state variable, two state variables show slight overshoots in the second half of the time period, a third state variable shows intermittent moderate overshooting of the prediction in the second half of the time period. The second lowest state variable shows some undershooting throughput the second half of the time period, becoming stronger at the very end. The lowermost state variable shows strong undershooting for the duration of the second half of the time period.

A second heatmap 650 represents the same sensor measurements across the same time period as the first heatmap, but in which the residuals have been standardized by dividing each residual by the standard deviation of the state variable measurements included in the test data used to train the machine learning model. It is apparent that as a result of the standardization the deviations from normal operation of the machine become more emphatic and consistent across more state parameters than is the case for the first heatmap 610. For example, the overshoots in values of LatAcc 652, LongRot 654 and LatRot 656 become more pronounced and more consistent with the undershoots in the bottom two state variables DriveNondriveEPS 658 and DriveNondriveEAS 660. The standardization provides for more accurate prediction and identification of machine maintenance issues by compensating for any relative differences in "goodness of fit" of the linear regression predictions for the different state variables.

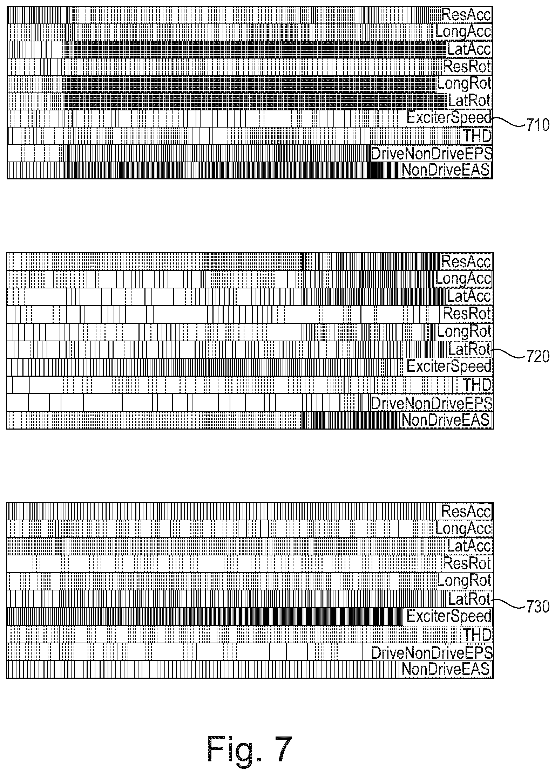

Figure 7 schematically illustrates three different heatmaps, each heatmap being characteristic of a different type of machine maintenance issue. An uppermost heatmap 710 captures standardized residuals of state variable data in a vibrating machine having a loose exciter. The defect is most readily identified via overshoots in the LatAcc, LongRot and LatRot. A middle heatmap 720 captures standardized residuals of state variable data in a vibrating machine having roller bearing damage on one of the exciters. This is most strongly signalled by undershoots in the ResAcc, LongAcc, LatAcc and DriveNondriveEAS. A lowermost heatmap 730 captures standardized residuals of state variable data in a vibrating machine having pulley wear in the material conveyor. This pulley wear issue is most prominent in an undershoot of the ExciterSpeed and a less strong undershoot in the LatRot. In this lowermost heatmap fewer of the state variables have characteristics that suggest the presence of the damage. It can be seen from the differences in characteristics of the three heatmaps 710, 720, 730 in Figure 7 that different machine maintenance issues may be associated with different characteristic heatmap "signatures" that may be used to identify the presence of the specific maintenance issue.

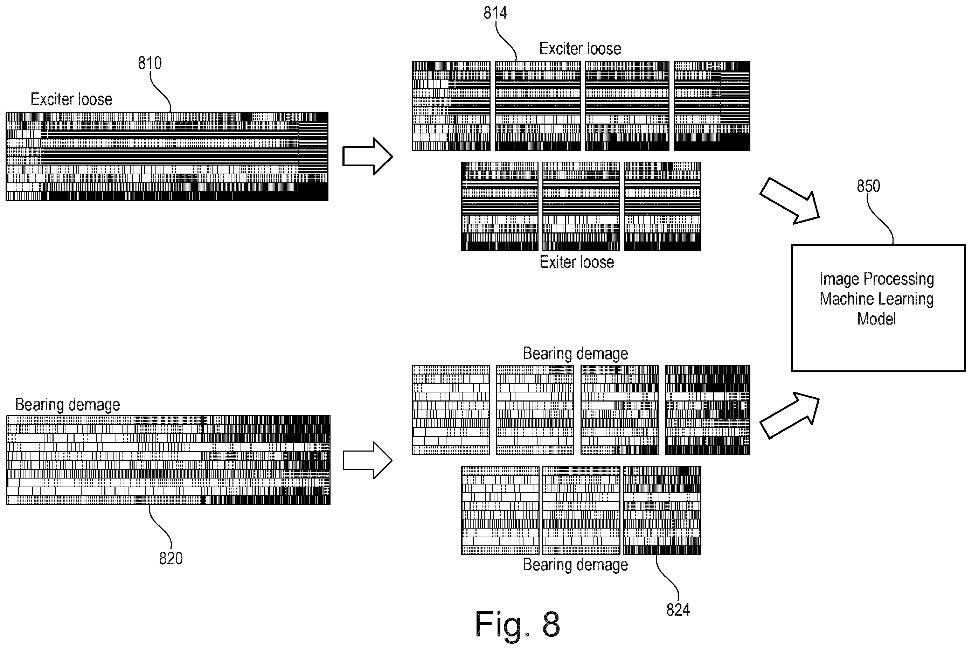

Figure 8 schematically illustrates how heatmaps characteristic of two different machine maintenance issues may be segmented and input to an image classifier machine learning model such as a CNN model or LSTM model. The segmented heatmaps may be used to train the image classifier machine learning model to recognise one or more machine maintenance issues in heatmaps. A first heatmap 810 is characteristic of a loose exciter and a second heatmap 820 is characteristic of bearing damage. These correspond to two of the heatmaps 710, 720 illustrated in Figure 7. The exciter loose heatmap is segmented into a sequence of parts. The segmentation is useful for allowing damage to be classified at an early stage, in the time range when any damage is just beginning. The segments are learned independently of each other, so in this example, the relative temporal ordering of the segments is not important. In this example there are seven parts and the temporal ordering of the different parts is not preserved. Two or more of the parts may overlap. Each of the seven constituent parts may be labelled with the damage class. The labelled segments of the heatmap may be input to a CNN to train the network to classify damage. In a similar way, the bearing damage heatmap 820 may be segmented into a plurality of parts 824 each labelled as bearing damage. Labelled training data corresponds to a "supervised" learning process. The segmented images may have overlapping portions and may be input to the CNN in any temporal order. More than one complete heatmap may be used for training purposes. The number of segments is not limited to seven. The training data may comprise damage categories in addition to or instead of the bearing damage and exciter loose fault. In alternative examples, "unsupervised" learning may be implemented in which the heatmaps are input without labels. Unsupervised learning is more computationally intensive than supervised learning. The segmented heatmaps 814, 824 are input to an image processing machine learning model 850 to train the machine learning model to identify one or more maintenance issues associated with the machine. In an alternative example the heatmap data is used to train a machine learning model to identify one or more machine maintenance issues without first rendering the heatmap data as an image.

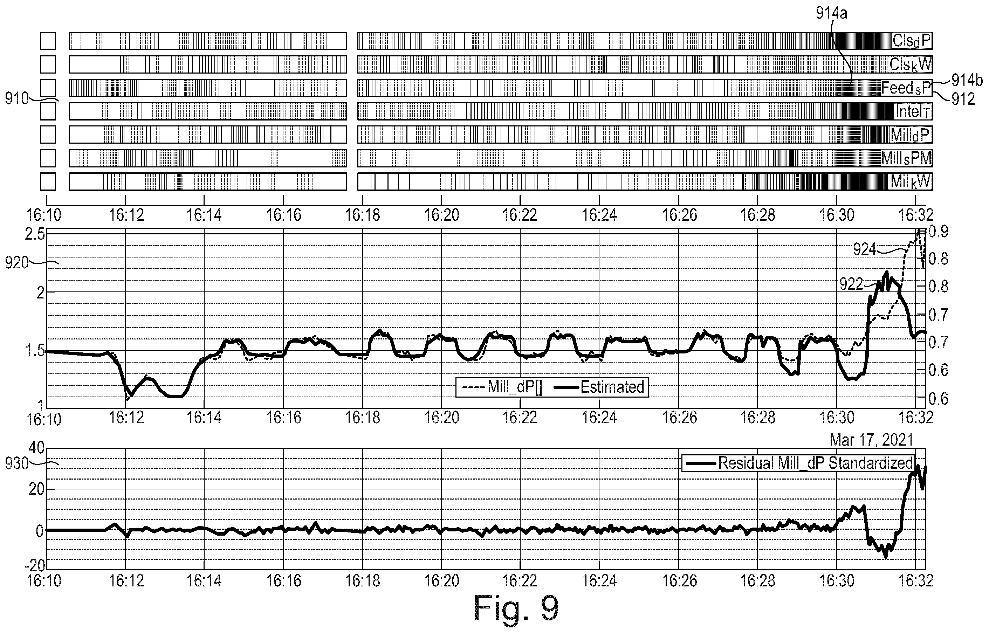

Figure 9 schematically illustrates the use of standardised residuals to identify a defect in a vertical roller mill machine. An uppermost chart 910 is a heatmap showing seven state variables appropriate for the vertical roller mill machine. These are a different set of state variables that those used for the vibrating machine of Figure 1. The state variables from top bar to bottom bar are: air pressure measured on the material classifier (ClsdP); power supply to the material classifier (ClskW); material feed into the mill (FeedSp); inlet temperature for drying the material in the mill (InletT); air pressure measured on the mill base (MilldP); rotation speed of the mill motor (MillRPM); and power supply to the mill (MillkW).

The heatmap 910 representing the standardized residuals shows undershooting in the darkest areas and overshooting in the darker grey areas. For example, the variable FeedSp 912 shows an undershoot region 914a followed by an overshoot region 914b between the times 16:30 and 16:32. All seven state variables in this example consistently show deviations from normal operation in the time period between around 16:28 and 16:32.

The middle chart in Figure 9 shows measured values of the state variable MilldP alongside a linear regression prediction for values of this variable. The measured and predicted values track each other very closely all the way from 16:10 through until about 16:29 on the time axis, at which point the values begin to diverge. This divergence is most apparent between 16:30 and 16:32, where the measured values 924 increase and eventually rise above the predicted values 922. The numerical values on the left-hand vertical axis are the relevant ones for the values of this state variable. The values on the right y-axis may be disregarded here.

The lowermost chart 930 in Figure 9 shows the standardized residual for the state variable MilldP. The value of the standardized residual is substantially zero for the time period extending from 16:10 until about 16:30, whereupon it begins to oscillate above and below zero. This change in the standardized residual value implies a change in behaviour of the vertical roller mill at the same time. The deviation of the standardized residual from zero can be seen to coincide with the characteristic overshooting and undershooting replicated across all seven state variables in the uppermost chart 910 in the time interval between 16:28 and 16:32. These deviations are caused by the mill roll becoming blocked due to loss of oil.

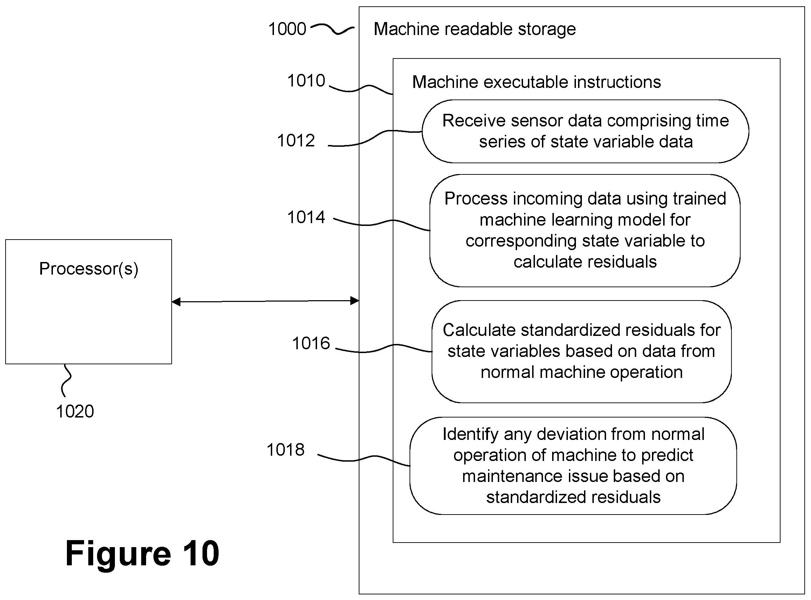

Figure 10 schematically illustrates machine readable storage and machine readable instructions for monitoring operation of a machine having a mechanical component. Figure 10 shows machine readable storage 1000 storing a set of machine executable instructions 1010. The machine-executable instructions comprise: first instructions 1012 to receive sensor data corresponding to a time series of state variable data; second instructions 1014 to process incoming data using a pre-trained machine learning model for the corresponding state variable to calculate residuals; third instructions 1016 to calculate standardized residuals for state variables based on data from normal machine operation; and fourth instructions 1018 to identify any deviation from normal operation of the machine and to predict or detect a maintenance issue based on the standardized residuals.

The machine executable instructions may be executed on one or more processor(s) 1020. The processor(s) may be in a single computing device or may alternatively be distributed between two or more different computing devices of the computing system.

The instructions 1010, 1012, 1014, 1016, and 1018 may be processed by general purpose processing circuitry configured by program instructions to perform specified processing functions. The circuitry may also be configured by modification to the processing hardware. The configuration of the circuitry to perform a specified function may be limited exclusively to hardware, limited exclusively to software, or a combination of hardware modification and software execution. Program instructions may be used to configure the logic gates of general purpose or special purpose processing circuitry to perform a processing function.

Circuitry may be implemented, for example, as a hardware circuit comprising processors, microprocessors, circuits, circuit elements (e.g., transistors, resistors, capacitors, inductors, and so forth), integrated circuits, application specific integrated circuits, programmable logic devices, digital signal processors, field programmable gate arrays, logic gates, registers, semiconductor devices, chips, microchips, chip sets, and the like.

The processor(s) 1020 of Figure 10 may comprise general purpose processors, network processors that process data communicated over a computer network, graphics processing units or other types of processor, including reduced instruction set computers or complex instruction set computers. Each processor may have a single or a multiple core design. Multiple core processors may integrate different processor core types on the same integrated circuit die.

The machine operation monitoring according to the present technique may be implemented in whole or in part by machine-readable program instructions. Machine-readable program instructions may be provided on a transitory medium, such as a transmission medium, or on a non-transitory medium, such as a storage medium. These machine-readable instructions (computer program instructions) may be implemented in a high level procedural or object oriented programming language. However, the program(s) may be implemented in assembly or machine language, if desired. In any case, the language may be a compiled or interpreted language, and combined with hardware implementations.

Examples of the present disclosure are applicable for use with all types of semiconductor integrated circuit (IC) chips. Examples of these IC chips include but are not limited to processors, controllers, chipset components, programmable logic arrays, memory chips, and network chips. One or more of the components described herein may be embodied as a System On Chip (SOC) device. A SOC may include, for example, one or more Central Processing Unit cores, one or more Graphics Processing Unit cores, an Input/Output interface, and a memory controller. In some examples, a SOC and its components may be provided on one or more integrated circuit die; for example, they may be packaged into a single semiconductor device.

## Claims

1. A computer-implemented method for monitoring operation of a machine having a mechanical component, the method comprising:
receiving sensor data comprising a time series of measurements of an operational parameter of the machine corresponding to a state variable;
processing the time series of measurements for the state variable using a machine-learning model pre-trained to predict normal operational behaviour of the machine based on values of the state variable observed for a time period during normal operation of the machine, the processing to calculate a standardized residual for the state variable across the time series based on a prediction of the pre-trained machine-learning model; and
identifying any deviation from normal operation of the machine based on values of the standardized residual, wherein the identification of the deviation from normal operation comprises taking into account a sign of the standardized residual such that an overshooting of the standardized residual is distinguishable from an under-shooting of the standardized residual, wherein the received sensor data relates to a plurality of operational parameters of the machine corresponding to respective different state variables and wherein the identification of the deviation takes into account correlations between the standardized residuals of the plurality of operational parameters, comprising generating a machine readable heatmap for the plurality of state variables across the time series, the heatmap to indicate for each state variable, any overshooting and any undershooting of the standardized residuals for at least one state variable and wherein the heatmap is used in the identification of the deviation from normal operation;
wherein a respective different pre-trained machine learning model is provided for each different state variable,
wherein an integer number, N, of linear regression models is provided respectively to predict normal operational behaviour for N state variables, comprising generating a digital image representing the heatmap and presenting the digital image to a user on a control interface for the machine
comprising providing the heatmap to an artificial neural network pre-trained using heatmaps for the plurality of state variables captured during normal operation of the machine, the identification of any deviation from normal operation being performed using the pre-trained artificial neural network.

2. Computer-implemented method of claim 1, wherein the artificial neural network is pre-trained based on the heatmaps for the plurality of state variables captured during normal operation to perform damage classification to identify different types of deviation from normal operation based on correlations in undershooting and overshooting as a function of time between different ones of the plurality of state variables.

3. Computer-implemented method of claim 2, wherein the artificial neural network is pre-trained by segmenting a heatmap into a plurality of distinct or partially overlapping time segments in inputting the time-segmented heatmap images to the artificial neural network for classification.

4. Computer-implemented method of claim 2 or claim 3, wherein the heatmap images used for pre-training are labelled by a known maintenance issue present in the machine when the sensor data for the heatmap image was captured.

5. A computer-implemented method for training an artificial neural network to identify any deviations from normal operation of a machine having a mechanical part, the method comprising:
receiving machine-readable data comprising standardized residuals calculated based on a difference in values of one or more state variables between sensor data captured from the machine in a time period and a prediction for the value of the corresponding state variable made using a pre-trained machine learning model;
generating a heatmap data set representing the time period and indicating any overshooting or undershooting as a function of time of standardized residuals of sensor data for each of one or more state variables; and
using the heatmap data set to train the artificial neural network to detect any maintenance issues with the machine
and wherein the heatmap is generated using the method of monitoring according to any of claims 1 to 4.

6. Computer-implemented method of claim 5, wherein the heatmap data set is rendered as image data and the heatmap image is input to the artificial neural network to perform the training.

7. Computer-implemented method of claim 6, wherein the artificial neural network is one of a convolutional neural network and a long term short term memory neural network.

8. Computer-implemented method according to claim 6 or claim 7, wherein the heatmap is segmented in to a plurality of distinct or overlapping time segments prior to input to the artificial neural network to train the artificial neural network.

9. A transitory or non-transitory machine readable medium comprising machine-readable instructions to perform the computer-implemented method of any one of claims 1 to 8.

10. Data processing apparatus, configured to perform the computer-implemented methods of claims 1 to 4, the apparatus comprising:
a memory to store sensor data captured during operation of a machine having a mechanical part; and
processing circuitry arranged to:
access the sensor data from the memory, wherein the sensor data comprises a time series of measurements of an operational parameter of the machine corresponding to a state variable;
process the time series of measurements for the state variable using a machine-learning model pre-trained to predict normal operational behaviour of the machine based on values of the state variable observed for a time period during normal operation of the machine, the processing to calculate a standardized residual for the state variable across the time series based on a prediction of the pre-trained machine-learning model; and
identify any deviation from normal operation of the machine based on values of the standardized residual.

11. Data processing apparatus comprising processing circuitry to:
receive machine-readable data comprising standardized residuals calculated based on a difference in values of one or more state variables between sensor data captured from the machine in a time period and a prediction for the value of the corresponding state variable made using a pre-trained machine learning model;
generate a heatmap data set representing the time period and indicating any overshooting or undershooting as a function of time of standardized residuals of sensor data for each of one or more state variables; and
use the heatmap data set to train the artificial neural network to detect any maintenance issues with the machine according to the training method of claims 5 to 8.

12. Data processing apparatus of claim 11, wherein the heatmap data set is rendered as image data and the heatmap image is input to the artificial neural network to perform the training.

13. Data processing apparatus according to claim 12, wherein the artificial neural network is one of a convolutional neural network and a long term short term memory neural network.

## Patentansprüche

1. Computerimplementiertes Verfahren zum Überwachen eines Betriebs einer Maschine mit einer mechanischen Komponente, wobei das Verfahren umfasst:
Empfangen von Sensordaten, die eine Zeitreihe von Messwerten eines Betriebsparameters der Maschine umfassen, der einer Zustandsvariablen entspricht;
Verarbeiten der Zeitreihe von Messwerten für die Zustandsvariable unter Verwendung eines Maschinenlernmodells, das vorab trainiert wurde, um ein normales Betriebsverhalten der Maschine auf Grundlage von Werten der Zustandsvariable vorherzusagen, die über einen Zeitraum während eines normalen Betriebs der Maschine beobachtet wurden, wobei die Verarbeitung dazu dient, auf Grundlage einer Vorhersage des vorab trainierten Maschinenlernmodells einen standardisierten Restwert für die Zustandsvariable über die gesamte Zeitreihe hinweg zu berechnen; und
Identifizieren einer etwaigen Abweichung vom Normalbetrieb der Maschine auf Grundlage der Werte des standardisierten Restwerts, wobei die Identifizierung der Abweichung vom Normalbetrieb Berücksichtigen eines Vorzeichens des standardisierten Restwerts umfasst, sodass ein Überschreiten des standardisierten Restwerts von einem Unterschreiten des standardisierten Restwerts unterscheidbar ist, wobei sich die empfangenen Sensordaten auf eine Vielzahl von Betriebsparametern der Maschine beziehen, die jeweils unterschiedlichen Zustandsvariablen entsprechen, und wobei bei der Identifizierung der Abweichung Korrelationen zwischen den standardisierten Restwerten der Vielzahl von Betriebsparametern berücksichtigt werden, umfassend Erzeugen einer maschinenlesbaren Heatmap für die Vielzahl von Zustandsvariablen über die Zeitreihe hinweg, wobei die Heatmap für jede Zustandsvariable ein Überschreiten und ein Unterschreiten der standardisierten Restwerte für mindestens eine Zustandsvariable anzeigt und wobei die Heatmap bei der Identifizierung der Abweichung vom Normalbetrieb verwendet wird;
wobei für jede einzelne Zustandsvariable ein jeweils anderes vortrainiertes Maschinenlernmodell bereitgestellt wird,
wobei eine ganze Zahl N, linearer Regressionsmodelle bereitgestellt wird, um ein normales Betriebsverhalten für N Zustandsvariablen vorherzusagen, umfassend Erzeugen eines digitalen Bildes, das die Heatmap darstellt, und Anzeigen des digitalen Bildes für einen Benutzer auf einer Steuerschnittstelle der Maschine, umfassend Bereitstellen der Heatmap an ein künstliches neuronales Netz, das unter Verwendung von Heatmaps für die Vielzahl von Zustandsvariablen, die während des Normalbetriebs der Maschine erfasst wurden, vorab trainiert wurde, wobei die Identifizierung einer Abweichung vom Normalbetrieb unter Verwendung des vorab trainierten künstlichen neuronalen Netzes durchgeführt wird.

2. Computerimplementiertes Verfahren nach Anspruch 1, wobei das künstliche neuronale Netz auf Grundlage der Heatmaps für die Vielzahl von Zustandsvariablen, die während des Normalbetriebs erfasst wurden, vorab trainiert wird, um eine Schadensklassifizierung durchzuführen, um verschiedene Arten von Abweichungen vom Normalbetrieb auf Grundlage von Korrelationen bei Unterschreitungen und Überschreitungen als Funktion der Zeit zwischen verschiedenen der Vielzahl von Zustandsvariablen zu identifizieren.

3. Computerimplementiertes Verfahren nach Anspruch 2, wobei das künstliche neuronale Netz durch Segmentieren einer Heatmap in eine Vielzahl unterschiedlicher oder sich teilweise überlappender Zeitabschnitte und Eingeben der zeitlich segmentierten Heatmap-Bilder in das künstliche neuronale Netz zur Klassifizierung vorab trainiert wird.

4. Computerimplementiertes Verfahren nach Anspruch 2 oder Anspruch 3, wobei die für das Vortrainieren verwendeten Heatmap-Bilder anhand eines bekannten Wartungsproblems gekennzeichnet sind, das bei der Maschine vorlag, als die Sensordaten für das Heatmap-Bild erfasst wurden.

5. Computerimplementiertes Verfahren zum Trainieren eines künstlichen neuronalen Netzes, um etwaige Abweichungen von einem Normalbetrieb einer Maschine mit einer mechanischen Komponente zu identifizieren, wobei das Verfahren umfasst:
Empfangen maschinenlesbarer Daten, die standardisierte Restwerte, die auf Grundlage einer Differenz von Werten einer oder mehrerer Zustandsvariablen zwischen Sensordaten berechnet wurden, die von der Maschine in einem Zeitraum erfasst wurden, und eine Vorhersage für den Wert der entsprechenden Zustandsvariablen umfassen, die unter Verwendung eines vorab trainierten Maschinenlernmodells erstellt wurde;
Erzeugen eines Heatmap-Datensatzes, der den Zeitraum darstellt und etwaige Überschreitungen oder Unterschreitungen standardisierter Restwerte der Sensordaten für jede der einen oder der mehreren Zustandsvariablen als Funktion der Zeit anzeigt; und
Verwenden des Heatmap-Datensatzes, um das künstliche neuronale Netz zu trainieren, um etwaige Wartungsprobleme bei der Maschine zu erkennen, wobei die Heatmap unter Verwendung des Überwachungsverfahrens nach einem der Ansprüche 1 bis 4 erzeugt wird.

6. Computerimplementiertes Verfahren nach Anspruch 5, wobei der Heatmap-Datensatz als Bilddaten dargestellt wird und das Heatmap-Bild in das künstliche neuronale Netz eingegeben wird, um das Training durchzuführen.

7. Computerimplementiertes Verfahren nach Anspruch 6, wobei das künstliche neuronale Netz entweder ein neuronales Faltungsnetz oder ein neuronales Long-Term-Short-Term-Memory-Netz ist.

8. Computerimplementiertes Verfahren nach Anspruch 6 oder Anspruch 7, wobei die Heatmap vor der Eingabe in das künstliche neuronale Netz in eine Vielzahl unterschiedlicher oder sich überlappender Zeitsegmente unterteilt wird, um das künstliche neuronale Netz zu trainieren.

9. Flüchtiges oder nichtflüchtiges maschinenlesbares Medium, das maschinenlesbare Anweisungen zum Durchführen des computerimplementierten Verfahrens nach einem der Ansprüche 1 bis 8 umfasst.

10. Datenverarbeitungsvorrichtung, die zur Durchführung der computerimplementierten Verfahren nach den Ansprüchen 1 bis 4 ausgelegt ist, wobei die Vorrichtung umfasst:
einen Speicher zum Speichern von Sensordaten, die während eines Betriebs einer Maschine mit einer mechanischen Komponente erfasst wurden; und
eine Verarbeitungsschaltung, die dazu ausgelegt ist:
auf die Sensordaten aus dem Speicher zuzugreifen, wobei die Sensordaten eine Zeitreihe von Messwerten eines Betriebsparameters der Maschine umfassen, der einer Zustandsvariablen entspricht;
die Zeitreihe von Messwerten für die Zustandsvariable unter Verwendung eines Maschinenlernmodells zu verarbeiten, das vorab trainiert wurde, um ein normales Betriebsverhalten der Maschine auf Grundlage von Werten der Zustandsvariable vorherzusagen, die über einen Zeitraum während eines normalen Betriebs der Maschine beobachtet wurden, wobei die Verarbeitung dazu dient, auf Grundlage einer Vorhersage des vorab trainierten Maschinenlernmodells einen standardisierten Restwert für die Zustandsvariable über die gesamte Zeitreihe hinweg zu berechnen; und
auf Grundlage von Werten des standardisierten Restwerts etwaige Abweichungen vom Normalbetrieb der Maschine zu identifizieren.

11. Datenverarbeitungsvorrichtung, die eine Verarbeitungsschaltung umfasst, um:
maschinenlesbare Daten zu empfangen, die standardisierte Restwerte, die auf Grundlage einer Differenz von Werten einer oder mehrerer Zustandsvariablen zwischen Sensordaten berechnet wurden, die von der Maschine in einem Zeitraum erfasst wurden, und eine Vorhersage für den Wert der entsprechenden Zustandsvariablen umfassen, die unter Verwendung eines vorab trainierten Maschinenlernmodells erstellt wurde;
Einen Heatmap-Datensatz zu erzeugen, der den Zeitraum darstellt und etwaige Überschreitungen oder Unterschreitungen standardisierter Restwerte der Sensordaten für jede der einen oder der mehreren Zustandsvariablen als Funktion der Zeit anzeigt; und
den Heatmap-Datensatz zu verwenden, um das künstliche neuronale Netz gemäß dem in den Ansprüchen 5 bis 8 beschriebenen Trainingsverfahren zu trainieren, um etwaige Wartungsprobleme an der Maschine zu erkennen.

12. Datenverarbeitungsvorrichtung nach Anspruch 11, wobei der Heatmap-Datensatz als Bilddaten dargestellt wird und das Heatmap-Bild in das künstliche neuronale Netz eingegeben wird, um das Training durchzuführen.

13. Datenverarbeitungsvorrichtung nach Anspruch 12, wobei das künstliche neuronale Netz entweder ein neuronales Faltungsnetz oder ein neuronales Long-Term-Short-Term-Memory-Netz ist.

## Revendications

1. Procédé, mis en œuvre par ordinateur, de surveillance du fonctionnement d'une machine possédant un composant mécanique, le procédé comprenant :
la réception de données de capteur comprenant une série temporelle de mesures d'un paramètre de fonctionnement de la machine correspondant à une variable d'état ;
le traitement de la série temporelle de mesures pour la variable d'état au moyen d'un modèle d'apprentissage automatique pré-entraîné à prédire un comportement de fonctionnement normal de la machine sur la base de valeurs de la variable d'état observées pendant une période de temps durant un fonctionnement normal de la machine, le traitement étant destiné à calculer un résidu normalisé pour la variable d'état sur toute la série temporelle sur la base d'une prédiction du modèle d'apprentissage automatique pré-entraîné ; et
l'identification de tout écart par rapport à un fonctionnement normal de la machine sur la base de valeurs du résidu normalisé, l'identification de l'écart par rapport à un fonctionnement normal comprenant la prise en compte d'un signe du résidu normalisé de sorte qu'un surdépassement du résidu normalisé puisse être distingué d'un sous-dépassement du résidu normalisé, les données de capteur reçues se rapportant à une pluralité de paramètres de fonctionnement de la machine correspondant à des variables d'état respectives différentes et l'identification de l'écart prenant en compte des corrélations entre les résidus normalisés de la pluralité de paramètres de fonctionnement, comprenant la génération d'une carte thermique lisible par machine pour la pluralité de variables d'état sur toute la série temporelle, la carte thermique étant destinée à indiquer, pour chaque variable d'état, tout surdépassement et tout sous-dépassement des résidus normalisés pour au moins une variable d'état et la carte thermique étant utilisée dans l'identification de l'écart par rapport à un fonctionnement normal ;
dans lequel un modèle d'apprentissage automatique pré-entraîné respectif différent est fourni pour chaque variable d'état différente,
dans lequel un nombre entier, N, de modèles de régression linéaire est fourni respectivement pour prédire un comportement de fonctionnement normal pour N variables d'état, comprenant la génération d'une image numérique représentant la carte thermique et la présentation de l'image numérique à un utilisateur sur une interface de commande pour la machine, comprenant la fourniture de la carte thermique à un réseau de neurones artificiels pré-entraîné au moyen de cartes thermiques pour la pluralité de variables d'état capturées pendant un fonctionnement normal de la machine, l'identification de tout écart par rapport à un fonctionnement normal étant réalisée au moyen du réseau de neurones artificiels pré-entraîné.

2. Procédé mis en œuvre par ordinateur selon la revendication 1, dans lequel le réseau de neurones artificiels est pré-entraîné sur la base des cartes thermiques pour la pluralité de variables d'état capturées pendant un fonctionnement normal afin de réaliser une classification des dommages pour identifier différents types d'écart par rapport à un fonctionnement normal sur la base de corrélations dans le sous-dépassement et le surdépassement en fonction du temps entre différentes variables d'état parmi la pluralité de variables d'état.

3. Procédé mis en œuvre par ordinateur selon la revendication 2, dans lequel le réseau de neurones artificiels est pré-entraîné par segmentation d'une carte thermique en une pluralité de segments temporels distincts ou se chevauchant partiellement lors de l'application des images de carte thermique segmentées temporellement en entrée du réseau de neurones artificiels pour classification.

4. Procédé mis en œuvre par ordinateur selon la revendication 2 ou la revendication 3, dans lequel les images de carte thermique utilisées pour le pré-entraînement sont étiquetées par un problème de maintenance connu présent dans la machine lorsque les données de capteur pour l'image de carte thermique ont été capturées.

5. Procédé, mis en œuvre par ordinateur, d'entraînement d'un réseau de neurones artificiels pour identifier tout écart par rapport à un fonctionnement normal d'une machine possédant une pièce mécanique, le procédé comprenant :
la réception de données lisibles par machine comprenant des résidus normalisés calculés sur la base d'une différence de valeurs d'une ou de plusieurs variables d'état entre des données de capteur capturées à partir de la machine dans une période de temps et une prédiction pour la valeur de la variable d'état correspondante effectuée au moyen d'un modèle d'apprentissage automatique pré-entraîné ;
la génération d'un ensemble de données de carte thermique représentant la période de temps et indiquant tout surdépassement ou sous-dépassement en fonction du temps de résidus normalisés de données de capteur pour chacune d'une ou de plusieurs variables d'état ; et
l'utilisation de l'ensemble de données de carte thermique pour entraîner le réseau de neurones artificiels à détecter tout problème de maintenance concernant la machine, et dans lequel la carte thermique est générée au moyen du procédé de surveillance selon l'une quelconque des revendications 1 à 4.

6. Procédé mis en œuvre par ordinateur selon la revendication 5, dans lequel l'ensemble de données de carte thermique est rendu sous forme de données d'image et l'image de carte thermique est appliquée en entrée du réseau de neurones artificiels pour réaliser l'entraînement.

7. Procédé mis en œuvre par ordinateur selon la revendication 6, dans lequel le réseau de neurones artificiels est soit un réseau de neurones convolutionnel, soit un réseau de neurones à mémoire à long et à court terme.

8. Procédé mis en œuvre par ordinateur selon la revendication 6 ou la revendication 7, dans lequel la carte thermique est segmentée en une pluralité de segments temporels distincts ou se chevauchant avant son application en entrée du réseau de neurones artificiels pour entraîner le réseau de neurones artificiels.

9. Support transitoire ou non transitoire lisible par machine comprenant des instructions lisibles par machine pour réaliser le procédé mis en œuvre par ordinateur selon l'une quelconque des revendications 1 à 8.

10. Appareil de traitement de données, configuré pour réaliser les procédés mis en œuvre par ordinateur selon les revendications 1 à 4, l'appareil comprenant :
une mémoire pour stocker des données de capteur capturées pendant le fonctionnement d'une machine possédant une pièce mécanique ; et
une circuiterie de traitement agencée pour :
accéder aux données de capteur à partir de la mémoire, les données de capteur comprenant une série temporelle de mesures d'un paramètre de fonctionnement de la machine correspondant à une variable d'état ;
traiter la série temporelle de mesures pour la variable d'état au moyen d'un modèle d'apprentissage automatique pré-entraîné à prédire un comportement de fonctionnement normal de la machine sur la base de valeurs de la variable d'état observées pendant une période de temps durant un fonctionnement normal de la machine, le traitement étant destiné à calculer un résidu normalisé pour la variable d'état sur toute la série temporelle sur la base d'une prédiction du modèle d'apprentissage automatique pré-entraîné ; et
identifier tout écart par rapport à un fonctionnement normal de la machine sur la base de valeurs du résidu normalisé.

11. Appareil de traitement de données comprenant une circuiterie de traitement pour :
recevoir des données lisibles par machine comprenant des résidus normalisés calculés sur la base d'une différence de valeurs d'une ou de plusieurs variables d'état entre des données de capteur capturées à partir de la machine dans une période de temps et une prédiction pour la valeur de la variable d'état correspondante effectuée au moyen d'un modèle d'apprentissage automatique pré-entraîné ;
générer un ensemble de données de carte thermique représentant la période de temps et indiquant tout surdépassement ou sous-dépassement en fonction du temps de résidus normalisés de données de capteur pour chacune d'une ou de plusieurs variables d'état ; et
utiliser l'ensemble de données de carte thermique pour entraîner le réseau de neurones artificiels à détecter tout problème de maintenance avec la machine conformément au procédé d'entraînement selon les revendications 5 à 8.

12. Appareil de traitement de données selon la revendication 11, dans lequel l'ensemble de données de carte thermique est rendu sous forme de données d'image et l'image de carte thermique est appliquée en entrée du réseau de neurones artificiels pour réaliser l'entraînement.

13. Appareil de traitement de données selon la revendication 12, dans lequel le réseau de neurones artificiels est soit un réseau de neurones convolutionnel, soit un réseau de neurones à mémoire à long et à court terme.
